# EUROPEAN PATENT SPECIFICATION

(11) **EP 3 990 847 B1**
(45) Date of publication and mention of the grant of the patent: **27.09.2023**
(21) Application number: 20756955.9
(22) Date of filing: 29.06.2020
(51) Int. Cl.: F27B 7/32, B29C 48/39, F27D 3/08

(54) **METHOD OF FEEDING MOLTEN PLASTIC INTO A REACTOR AND DEVICE**
VERFAHREN ZUM ZUFÜHREN VON GESCHMOLZENEM KUNSTSTOFF IN EINEN REAKTOR UND VORRICHTUNG
PROCÉDÉ D'ALIMENTATION EN PLASTIQUE FONDU DANS UN RÉACTEUR ET DISPOSITIF

(30) Priority: 28.06.2019 DE 102019004556; 11.07.2019 NL 2023476
(43) Date of publication of application: 04.05.2022
(73) Proprietor: Fuenix Ecogy IP B.V., 6004 HT Weert (NL)
(72) Inventor: BRUECK, Gernot Klaus, 6432 JP Hoensbroek (NL)
(74) Representative: Wittop Koning, Tom Hugo
(86) International application number: PCT/IB2020/056130
(87) International publication number: WO 2020/261241

(56) References cited:
- EP-A1- 1 057 612
- NL-A- 2 015 089
- US-A1- 2002 162 832

## Description

The invention relates to an essentially horizontally arranged rotary drum furnace for thermal cracking of plastic, comprising a heatable furnace housing defining a furnace chamber, the furnace chamber incorporating an axially extending tubular infeed device, the drum being rotatable in relation to the infeed device, the infeed device comprising, in the furnace chamber, a plurality of exit openings spaced axially at a distance from each other, the furnace comprising an outfeed opening at an axial end thereof, and to a method for thermoplastic treatment of plastic.

### State of the art

More and more plastic waste is generated, becoming a major problem for the world. In many countries, plastic waste is processed separately, but the processing industries have difficulties to produce something meaningful with it, because recycling such a mixture is not easy. Therefore, recycling is only possible to a very limited extent.

The usual processing is simple incineration, but this amounts to a waste of raw materials.

In recent years, many companies around the world have been investigating chemical recycling, wherein the molecular chains are only separated to produce reusable chemicals, which are CO₂ neutral on the one hand and can reduce oil consumption on the other.

### Problems

The problems related to thermal cracking, i.e. the separation of molecular chains by heat action, are manifold.

In order to obtain products of equal quality, it is very important that the plastic is continuously subjected to the same heat. Depending on the construction of the reactors, this is virtually impossible to guarantee. In addition, due to the low IR absorption of most plastics, the use of radiant heat is not possible. Convection is not a solution either, as herein, heat transfer is very low, especially during a short residence time.

The only secure heat transfer takes place through contact heat, but for this, on the one hand, there must be sufficient surface area, and, on the other hand, the heat should also reach the plastic quickly and easily.

The thermal cracking of plastic is known from NL2015089. Herein, a horizontally installed rotary drum furnace is described, the drum of which is rotatable around a horizontal axis, an inner wall of the drum being heatable. The drum extends axially through a tubular lance with exit openings, through which lance particulate material, such as plastic material, can be fed into the drum. It is intended that when the oven is in operation, the particles are blown through the lance and then enter the heated furnace chamber through the exit openings and are thermally cracked by contact with the wall. However, blowing in solid particulate material causes problems that make the furnace operation more difficult. For example, the particles can stick to the wall, or, when the particulate material is converted into a gaseous state by contact with the wall, the flow of particles from the lance towards the drum wall can be prevented due to the rising gases. The introduction of plastic material in particulate form, in particular, remains problematic. One must constantly make sure that the plastic is prepared in such a way that the plastic flakes quickly reach the surface. Due to their low density, the flakes also have to overcome the resistance of the gases formed on the surface.

### Solution of the problem

The invention envisages to eliminate the abovementioned problem and provides a rotary drum furnace of the abovementioned type, being characterized in that means are located in the tubular infeed device to displace plastic in molten state in the direction of the outfeed opening therethrough.

It has been found that the introduction of the plastic in liquid form into the furnace chamber does not, or to a significantly lesser extent, give rise to the above-mentioned problems above, and that the liquid plastic already evaporates in the furnace chamber before coming into contact with the furnace wall. Moreover, it is no longer necessary to sort the plastic carefully according to its composition and size beforehand.

According to the invention, the plastic is melted prior to being introduced into the rotary drum furnace and the molten plastic is then displaced by the infeed device towards the outfeed opening of the rotary drum furnace to be released through the exit openings into the furnace chamber. Such displacement devices are conveniently arranged as an extrusion device in the furnace chamber through which the molten plastic is introduced into the furnace chamber.

For performing the method of the present invention, the extrusion device cannot only be heated, e.g. to at least 300°C, but can be brought to a higher temperature in the direction of the outfeed end, advantageously of up to 500°C, therewith separating the molecular chains already towards paraffin.

As a result, the viscosity of the molten plastic decreases, which considerably facilitates the infeed.

Heating of the plastic to melt can be advantageously carried out prior to the introduction of the plastic into the infeed device, such as in a melting furnace positioned upstream of the rotary drum furnace. It is important that at such an elevated temperature, the pressure is kept under control and that inlet of air is preferably prevented. Thereto, the rotary drum furnace is preferably airtight. It is also possible that the plastic has not yet melted at the beginning of the feed device, but that it is melted during displacement through the infeed device, wherein the plastic is molten by the time it reaches the first exit opening.

With a single or double screw extruder, the melt can be pressed into the reactor and subsequently be introduced in various ways. This can be done by means of a nozzle, wherein the plastic droplets, or already paraffinized droplets are sprayed into the reactor chamber. The exit openings are therefore preferably designed to allow the plastic melt to pass through dropwise.

A significantly improved infeed takes place over the entire length of the furnace chamber when the tubular infeed device extends over at least half the length of the furnace chamber, preferably over at least three quarters of the length, and most preferably over substantially the entire length of the furnace chamber. In the case of plastics, this may be just a tube comprising openings along its length which may also get larger the further away from the infeed. These openings may have the form of slits, wherein each slit can be designed as a slit-shaped cluster of round holes wherethrough the molten plastic enters the furnace chamber.

Alternatively, a slit slightly deviating over the entire length is also possible. At the end, such a tube can be closed so that sufficient transport pressure can be built up. It is also advantageous if such a slit is composed of round openings, the diameter of which increases as the distance to the infeed increases.

In a preferred embodiment, the tubular infeed device is encased by several layers, allowing thermal oil to flow therethrough in order to avoid overheating. It is also possible for an insulating layer to be present, which can comprise an aluminum sheath towards the hot side, therewith reflecting heat radiation. Such is advantageously covered by a light insulating layer to reduce or avoid contact with the hot outer jacket.

Optimally, the extrusion unit can also support the transport of the viscous mass by means of pumping jolts and accelerate the exiting droplets or veil so that these can spread better over the inner surface of the reactor when colliding therewith.

The invention also relates to a method for thermal cracking of plastic in molten form using the above device.

### Description

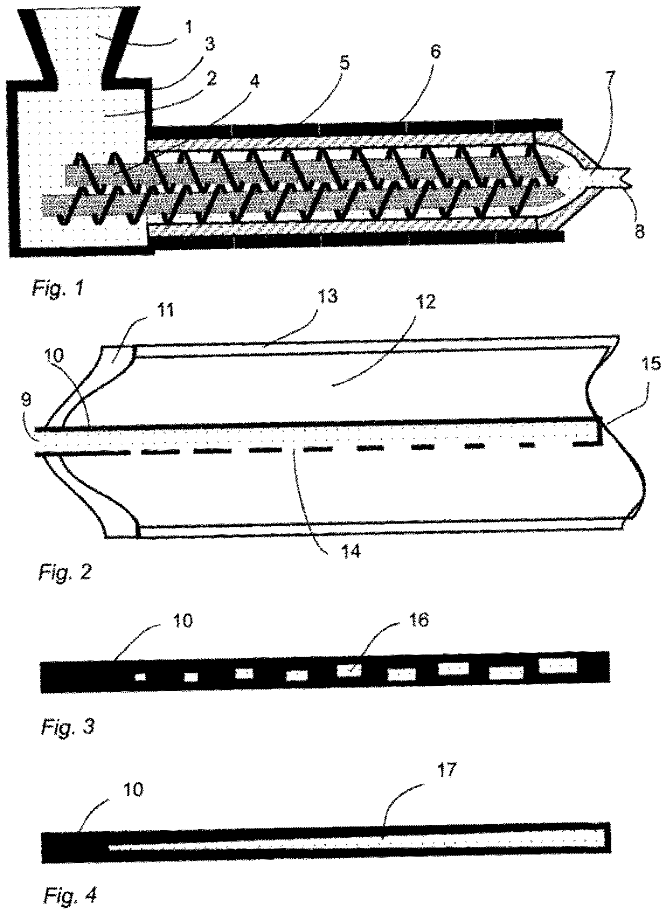

Figures 1 to 4 show the device according to the invention to perform the process of to the invention, showing the following details:
Figure 1 shows the heating and transport of molten plastic. Plastic flakes pass through funnel 1 into the heating container 2 having heatable walls 3. Herefrom, the melt is transported through screws 4 of the extrusion device 5 in the direction of outfeed 7. The extrusion unit 5 is surrounded by heaters 6, so that the plastic remains liquid or is made even more liquid by higher temperatures towards the outfeed 7. The cracked plastic, or the product 8, in particular gaseous hydrocarbons and/or paraffin, is then released through the outfeed 7.
Figure 2 shows the material infeed into the rotary drum reactor 12. The plastic is pressed into the inlet 9 of tube 10, which is fixed in the upright cover 11 of the reactor. The wall 13 of the reactor 12 is set to the correct temperature for the desired cracking process. The infeed tube 10 has at the bottom a plurality of openings 14 from which the melt can drip into the furnace chamber 13. At the end 15 the infeed tube is closed.
Figure 3 shows the inlet tube 10, with here clearly separate openings 16 that increase towards the end of the tube.
Figure 4 shows again an infeed tube 10, but now with a long continuous opening 17 that deviates more and more towards the end of the tube.

## Claims

1. An essentially horizontally arranged rotary drum furnace for thermal cracking of plastic, comprising a heatable furnace housing (13) defining a furnace chamber (12), the furnace chamber incorporating an axially extending tubular infeed device (10), the drum being rotatable in relation to the infeed device, the infeed device comprising, in the furnace chamber, a plurality of exit openings (14) spaced axially at a distance from each other, the furnace comprising an outfeed opening (7) at an axial end thereof, **characterized in that** means (4) are located in the tubular infeed device to displace plastic in molten state in the direction of the outfeed opening therethrough.

2. Rotary drum furnace according to claim 1, **characterized in that** in the tubular infeed device comprises an extrusion device (5) of the single or double helix type for moving the molten material.

3. Rotary drum furnace according to claim 1 or 2, **characterized in that** the infeed device extends over the length of the furnace chamber.

4. Rotary drum furnace according to claim 3, **characterized in that** the exit openings extend along the length of the infeed device.

5. Method of thermally cracking of plastic material, comprising the steps of introducing molten plastic in the rotary drum furnace of any of the preceding claims, wherein the plastic is melted prior to being introduced into the rotary drum furnace, displacing the molten plastic by the infeed device towards the outfeed opening of the rotary drum furnace, and releasing the molten plastic through the exit openings into the furnace chamber.

6. Method of thermally cracking of plastic material according to claim 5, **characterized in that** the rotary drum furnace includes an extrusion device which is heated.

7. Method according to claim 6, **characterized in that** the heating of the extruder in the direction of outfeed is increased.

8. Method according to any of the claims 5 to 7, **characterized in that** the displacement of the molten plastic through the extruder is in a pulsing manner.

9. Method according to any of the claims 5 to 8, **characterized in that** the molten plastic is sprayed into the reactor.

10. Method according to any of claims 5 to 9, **characterized in that** the molten plastic is discharged along the length of the furnace chamber through openings in the infeed device.

11. Method according to any of claims 5 to 10, **characterized in that** the infeed tube releases the molten plastic into the furnace chamber through one or more axially extending slits.

12. Method of operation according to any of claims 5 to 11, **characterized in that** the molten plastic is thrown back and forth towards the reactor wall by pulsing of the extrusion device.

13. Method of operation according to any of claims 5 to 12 **characterized in that** during the heating of the molten plastic up to 500°C conversion into paraffin takes place, the paraffin having a notifiable lower viscosity than the molten plastic.

## Patentansprüche

1. Im Wesentlichen horizontal angeordneter Drehtrommelofen zum thermischen Cracken von Kunststoff, der ein beheizbares Ofengehäuse (13) umfasst, das eine Ofenkammer (12) definiert, wobei die Ofenkammer eine sich axial erstreckende rohrförmige Beschickungsvorrichtung (10) einschließt, wobei die Trommel in Bezug auf die Beschickungsvorrichtung drehbar ist, wobei die Beschickungsvorrichtung in der Ofenkammer eine Vielzahl von Austrittsöffnungen (14) aufweist, die axial voneinander beabstandet sind, wobei der Ofen an seinem axialen Ende eine Austrittsöffnung (7) aufweist, **dadurch gekennzeichnet, dass** in der rohrförmigen Zuführvorrichtung Mittel (4) angeordnet sind, um Kunststoff in geschmolzenem Zustand in Richtung der Austrittsöffnung zu verdrängen.

2. Drehtrommelofen nach Anspruch 1, **dadurch gekennzeichnet, dass** in der rohrförmigen Beschickungsvorrichtung eine Extrusionsvorrichtung (5) vom Einfach- oder Doppelwendeltyp zum Bewegen des geschmolzenen Materials vorgesehen ist.

3. Drehtrommelofen nach Anspruch 1 oder 2, **dadurch gekennzeichnet, dass** sich die Beschickungsvorrichtung über die Länge der Ofenkammer erstreckt.

4. Drehtrommelofen nach Anspruch 3, **dadurch gekennzeichnet, dass** sich die Austrittsöffnungen über die Länge der Beschickungsvorrichtung erstrecken.

5. Verfahren zum thermischen Cracken von Kunststoffmaterial, umfassend die Schritte des Einführens von geschmolzenem Kunststoff in den Drehtrommelofen nach einem der vorhergehenden Ansprüche, wobei der Kunststoff vor dem Einführen in den Drehtrommelofen geschmolzen wird, des Verdrängens des geschmolzenen Kunststoffs durch die Einführvorrichtung in Richtung der Austrittsöffnung des Drehtrommelofens und des Freisetzens des geschmolzenen Kunststoffs durch die Austrittsöffnungen in die Ofenkammer.

6. Verfahren zum thermischen Cracken von Kunststoffmaterial nach Anspruch 5, **dadurch gekennzeichnet, dass** der Drehtrommelofen eine beheizte Extrusionsvorrichtung umfasst.

7. Verfahren nach Anspruch 6, **dadurch gekennzeichnet, dass** die Beheizung des Extruders in Richtung des Auslaufs erhöht wird.

8. Verfahren nach einem der Ansprüche 5 bis 7, **dadurch gekennzeichnet, dass** die Verschiebung der Kunststoffschmelze durch den Extruder pulsierend erfolgt.

9. Verfahren nach einem der Ansprüche 5 bis 8, **dadurch gekennzeichnet, dass** die Kunststoffschmelze in den Reaktor gespritzt wird.

10. Verfahren nach einem der Ansprüche 5 bis 9, **dadurch gekennzeichnet, dass** die Kunststoffschmelze entlang der Länge des Ofenraums durch Öffnungen in der Einzugsvorrichtung ausgetragen wird.

11. Verfahren nach einem der Ansprüche 5 bis 10, **dadurch gekennzeichnet, dass** das Einlaufrohr den geschmolzenen Kunststoff durch einen oder mehrere axial verlaufende Schlitze in den Ofenraum abgibt.

12. Verfahren nach einem der Ansprüche 5 bis 11, **dadurch gekennzeichnet, dass** die Kunststoffschmelze durch Pulsieren der Extrusionsvorrichtung gegen die Reaktorwand hin und her geschleudert wird.

13. Verfahren nach einem der Ansprüche 5 bis 12, **dadurch gekennzeichnet, dass** während des Erhitzens der Kunststoffschmelze auf 500°C eine Umwandlung in Paraffin erfolgt, wobei das Paraffin eine merklich niedrigere Viskosität als die Kunststoffschmelze aufweist.

## Revendications

1. Four à tambour rotatif disposé essentiellement horizontalement pour le craquage thermique de matières plastiques, comprenant une enceinte de four chauffable (13) définissant une chambre de four (12), la chambre de four incorporant un dispositif d'alimentation tubulaire s'étendant axialement (10), le tambour étant rotatif par rapport au dispositif d'alimentation, le dispositif d'alimentation comprenant, dans la chambre du four, une pluralité d'ouvertures de sortie (14) espacées axialement les unes des autres, le four comprenant une ouverture de sortie (7) à une extrémité axiale de celui-ci, **caractérisé en ce que** des moyens (4) sont situés dans le dispositif d'alimentation tubulaire pour déplacer le plastique à l'état fondu en direction de l'ouverture de sortie à travers celui-ci.

2. Four à tambour rotatif selon la revendication 1, **caractérisé en ce que** le dispositif tubulaire d'alimentation comprend un dispositif d'extrusion (5) du type à simple ou double hélice pour déplacer la matière en fusion.

3. Four à tambour rotatif selon la revendication 1 ou 2, **caractérisé par le fait que** le dispositif d'alimentation s'étend sur la longueur de la chambre du four.

4. Four à tambour rotatif selon la revendication 3, **caractérisé par le fait que** les ouvertures de sortie s'étendent sur la longueur du dispositif d'alimentation.

5. Procédé de craquage thermique d'une matière plastique, comprenant les étapes suivantes : introduction d'une matière plastique fondue dans le four à tambour rotatif de l'une quelconque des revendications précédentes, la matière plastique étant fondue avant d'être introduite dans le four à tambour rotatif, déplacement de la matière plastique fondue par le dispositif d'alimentation vers l'ouverture de sortie du four à tambour rotatif, et libération de la matière plastique fondue par les ouvertures de sortie dans la chambre du four.

6. Procédé de craquage thermique d'une matière plastique selon la revendication 5, **caractérisé par le fait que** le four à tambour rotatif comprend un dispositif d'extrusion qui est chauffé.

7. Procédé selon la revendication 6, **caractérisé en ce que** le chauffage de l'extrudeuse dans la direction de sortie est augmenté.

8. Procédé selon l'une quelconque des revendications 5 à 7, **caractérisé par le fait que** le déplacement de la matière plastique fondue à travers l'extrudeuse se fait par impulsions.

9. Procédé selon l'une des revendications 5 à 8, **caractérisé par le fait que** le plastique fondu est pulvérisé dans le réacteur.

10. Procédé selon l'une des revendications 5 à 9, **caractérisé par le fait que** la matière plastique fondue est déchargée le long de la chambre du four par des ouvertures dans le dispositif d'alimentation.

11. Procédé selon l'une des revendications 5 à 10, **caractérisé par le fait que** le tube d'alimentation libère le plastique fondu dans la chambre du four par une ou plusieurs fentes s'étendant axialement.

12. Procédé selon l'une des revendications 5 à 11, **caractérisé par le fait que** la matière plastique fondue est projetée d'avant en arrière vers la paroi du réacteur par des impulsions du dispositif d'extrusion.

13. Procédé selon l'une des revendications 5 à 12, **caractérisé par le fait que** pendant le chauffage de la matière plastique fondue jusqu'à 500°C, la conversion en paraffine a lieu, la paraffine ayant une viscosité inférieure à celle de la matière plastique fondue.
